# EUROPEAN PATENT APPLICATION

(11) **EP 4 607 541 A1**
(43) Date of publication of application: **27.08.2025**
(21) Application number: 25305110.6
(22) Date of filing: 28.01.2025
(51) Int. Cl.: H01B 7/282

(54) **A CABLE SHEATH OF A TIN-ANTIMONY ALLOY**

(30) Priority: 20.02.2024 NO 20240154
(71) Applicant: Nexans, 92400 Courbevoie (FR)
(72) Inventor: JOHANSON, Audun, 92400 Courbevoie (FR); MAURI, Massimiliano, 92400 Courbevoie (FR); SCHAWLANN, Sigurd, 92400 Courbevoie (FR)
(74) Representative: Acapo Onsagers AS

(57) **Abstract**

The invention therefore relates to a power cable comprising a cable core comprising an electrical conductor and an electrically insulating layer arranged radially outside the electrical conductor, and a water barrier sheath arranged radially outside the cable core, wherein the water barrier sheath comprises a metal layer, wherein the metal layer is an Sn alloy comprising Sb and wherein the Sn alloy comprises less than 4 wt.% of Sb.

## Description

### FIELD OF THE INVENTION

The present invention relates to metallic water barrier materials for power cables and in particular metallic water barrier materials for use in high voltage cables for both land and submarine applications.

### BACKGROUND

Power cables for intermediate to high voltage ratings typically comprise an inner conductor and several layers provided radially outside of the inner conductor, such as an electric insulation layer, a semiconductive shielding layer, an armouring layer and an outer sheathing.

Power cables commonly comprise a sheath layer consisting of lead to be used as a radial water barrier. This relates to submarine power cables but is also relevant for other cables subjected to potential humid environment. Water and humidity are detrimental to electrical insulating materials for all power cables conducting electricity at medium and high voltages.

Conventional cables often use extruded lead as radial water barrier. Lead is a metal applicable as radial water barrier because of its relatively low melting point, the metal is soft and has a high malleability. However, its toxicity and negative environmental effects encourage the industry to find alternative solutions.

It was discovered that tin or tin based alloys represent a basis for alternative materials for sheath materials. However, tin is associated with durability problems since tin pest is a kind of corrosion destroying the function of the water barrier sheath. There have been found elements by which the tin pest can be prevented. However, there could firstly be a challenge regarding availability of some metals for doping tin to prevent tin pest, and secondly the technical performance of alternatives to lead is not persuasive. The technical performance in terms of mechanical stability, mechanical processibility, and overall durability is to be improved.

As mentioned above lead is not desired due to environmental issues. Hence, one object of the present invention is to provide a water barrier sheath being made of a metal which substitutes lead, wherein the technical performance of the water barrier sheath should be approximately equivalent if not even better compared to lead based water barrier sheaths. Further, the durability of the metal alloy substituting lead should be at least equivalent if not better compared to state of the art solutions. Even further, it is an object of the invention to provide a water barrier sheath made of a material being accessible in order to prevent supply chain disruptions.

### SUMMARY OF THE INVENTION

The invention's underlying problems are solved by the subject-matter of claim 1. A first aspect of the invention therefore relates to a power cable comprising
- a cable core comprising an electrical conductor and an electrically insulating layer surrounding the electrical conductor, and
- a water barrier sheath surrounding the cable core, wherein the water barrier sheath comprises a metal layer, wherein the metal layer comprises an Sn alloy comprising Sb and wherein the Sn alloy comprises less than 4 wt.% of Sb.

The power cable according to the invention requires a cable core and a water barrier sheath. As for the cable core, it comprises at least one electrical conductor and an electrical insulating layer. The main function for the electrical insulating layer is the protection against electrical break down of the power cable. Therefore, the electrical insulating layer is surrounding the at least one electrical conductor. The term "surrounding" in the present application means that is arranged radially outside the electrical conductor in a way that it encloses the electrical conductor. In case there is more than one electrical conductor, the electrical insulating layer is arranged radially outside the further electrical conductors. There could be a layer between the electrical conductor and the electrical insulating layer.

The power cable requires a water barrier sheath, which is arranged radially outside the cable core. The water barrier sheath comprises at least one metal layer and, instead of lead typically being used in the state of art, the metal layer is a tin alloy comprising antimony, wherein the tin alloy comprises less than 4 wt.% of antimony.

It is disclosed herewith that the water barrier sheath comprises a metal layer, wherein the metal layer comprises an Sn alloy comprising Sb in a content of less than 4 wt.%, preferably from 0.1 wt.% to 3.9 wt.%, more preferred from 0.5 to 3.5 wt.%, even more preferred from 1 to 3 wt.%, and most preferred from 1.5 to 2.5 wt.%.

In one embodiment, the water barrier sheath comprises a metal layer, wherein the metal layer comprises an Sn alloy comprising Sb in a content from 1 wt.% to less than 4 wt.%.

In one embodiment, the water barrier sheath comprises a metal layer, wherein the metal layer comprises an Sn alloy comprising Sb in a content from 1 wt.% to 3.9 wt.%, preferably from 1 wt.% to 3.5 wt.%, more preferably from 1 wt.% to 3 wt.%, and even more preferably from 1 wt.% to 2.5 wt.%.

In one embodiment, the water barrier sheath comprises a metal layer, wherein the metal layer comprises an Sn alloy comprising Sb in a content of more than 0.5 wt.% and less than 4 wt.%, preferably more than 0.5 wt.% and less than or equal to 3.9 wt.%, more preferably more than 0.5 wt.% and less than or equal to 3.5 wt.%, even more preferably more than 0.5 wt.% and less than or equal to 3 wt.%, or more than 0.5 wt.% and less than or equal to 2.5 wt.%.

In one embodiment, the water barrier sheath comprises a metal layer, wherein the metal layer comprises an Sn alloy comprising Sb in a content of more than or equal to 1 wt.% and less than 4 wt.%, preferably more than or equal to 1 wt.% and less than or equal to 3.9 wt.%, more preferably more than or equal to 1 wt.% and less than or equal to 3.5 wt.%, even more preferably more than or equal to 1 wt.% and less than or equal to 3 wt.%, or more than or equal to 1 wt.% and less than or equal to 2.5 wt.%.

It is mentioned herewith that higher amounts of doping elements in tin alloys are known to prevent tin pest. With regard to antimony, it has surprisingly been found that tin pest can still be sufficiently be prevented if the content of antimony falls below 4 wt.%. Less than 4 wt.% of the antimony is associated with an improved procurement situation, i.e. the less antimony the higher the supply security in the meaning that a supply chain disruption is less probable. This becomes apparent from the adiabatic resource depletion factor: Antimony is associated with a high abiotic resource depletion (ADP) factor compared to tin. Reducing the amount of antimony in turn reduces the depletion on global reserves of antimony compared to tin. A higher ADP level suggests a higher scarcity levels which indicates the accessibility. i.e. reserves. The following Table 1 is taken from https://web.universiteitleiden.nl/cml/ssp/projects/lca2/report_abiotic_depletion_web .pdf and shows the ADP of tin and antimony:

**Table 1: ADP levels of different metals**

| Substance | CAS No. | Group | ADP kg antimony eq-/kg extraction | | |
|---|---|---|---|---|---|
| | | | Ultimate reserve | Reserve base | Reserve |
| Aluminum (Al) | 7429-90-5 | Element | 1.09E-09 | 2.53E-05 | 2.14E-05 |
| Antimony (Sb) | 7440-36-0 | Element | 1.00E+00 | 1.00E+00 | 1.00E+00 |
| Tin (Sn) | 7440-31-5 | Element | 1.62E-02 | 1.15E-01 | 7.77E-02 |

It shows that Sb is much rarer. Also, there geographic origin of Sb is a concern much more as compared with regard to Sn. The lower the Sb content the lower risk in view of the supply chain disruption.

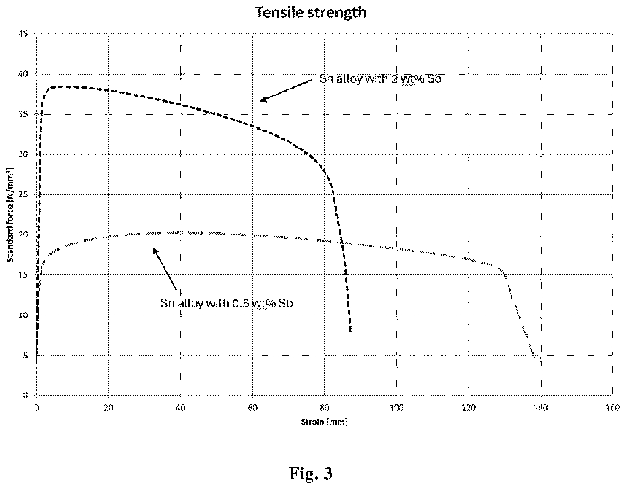

Further, a comparison of the tensile strength of Sn alloys having a lower Sb content to those having a higher Sb content show the beneficial effect. Figure 3 shows the tensile strength of an Sn alloy with a content of 2 wt.% of Sb and the tensile strength of an Sn alloy with a content of 0.5 wt.%. The elongation range before rupture is the interesting range. The lower the stress to obtain a certain elongation the better ductility. The alloy having an Sb content of 0.5 wt.% shows a lower stress in MPa, which means that the material is better in terms of processibility.

Therefore, taking account of a successful avoidance of tin pest and a beneficial processibility, the above ranges, in particular a range below 4% by weight, results in most beneficial effects.

Even further, it is a well alternative of state of the art solutions which make use of a higher antimony content.

In one embodiment of the first aspect, the water barrier sheath is an extruded metal sheath or a longitudinally welded sheath.

According to this embodiment, the water barrier sheath is applied onto the cable core, respectively onto the layer(s) applied onto the electrical conductor, by use of an extrusion or welding technique.

In one embodiment of the first aspect, the electrical conductor is a metal comprising Cu or Al.

High voltage cables typically comprise an electrical conductor comprising copper or aluminum. It may be an alloy of said metals. The electrical conductor may be made of a single strand or multiple strands. If the electrical conductor is made of multiple strands, voids may be filled with a polymeric material.

In one embodiment of the first aspect, the power cable is a subsea cable or a land cable.

In one embodiment of the first aspect, the power cable comprises at least one of following: three electrical conductors; two electrical conductors; a filler; a tube; a glass fibre.

The cable core may comprise three electrical conductors. That is particularly the case where the power cable is an AC cable. However, a power cable with three cores can be a DC cable as well. The power cable may comprise two electrical conductors, where the power cable is a DC cable. The power cable may comprise one electrical conductor, where the power cable is a DC cable. The power cable may comprise two electrical conductors, where the power cable is a DC cable, and the power cable comprises a cable core which further comprises a filler, a tube, and/or a glass fibre.

In one embodiment of the first aspect, the power cable is a high voltage power cable, preferably a high voltage power cable suitable for operating between 50 kV and 1.100 kV, more preferred between 100 kV and 1.000 kV, even more preferred between 250 kV and 750 kV.

This feature can be understood as follows: The high voltage power cable is constructed such that the power cable can conduct current in that high voltage range. This may imply also regulatory issues, i.e. the cable may need to fulfil regulatory demands such that it can be used as high voltage cable. It is particularly preferred that the high voltage power cable is a subsea cable and suitable for operating between 50 kV and 1.100 kV, more preferred between 100 kV and 1.000 kV, even more preferred between 250 kV and 750 kV.

In one embodiment of the first aspect, the water barrier sheath is a laminated structure comprising a metal layer between at least two insulating or non-insulating polymeric layers.

In one embodiment of the first aspect the water barrier sheath is applied to parts of the power cable or the whole length of the cable.

In one embodiment of the first aspect the power cable comprises an armoring layer being arranged radially outside the water barrier sheath, wherein the armoring layer preferably comprises a polymeric layer.

The armoring layer is an optional additional layer especially for protecting the water barrier sheath. The armoring layer does not necessarily be in direct contact with the water barrier sheath layer. There may be used intermediate layers between the water barrier sheath and the armoring layer.

In one embodiment of the first aspect the polymeric layer is fastened to the water barrier sheath by an adhesive layer to prevent movement between the polymeric layer and the water barrier sheath, or the water barrier sheath and the polymeric layer are not fastened together to allow movement between the polymeric layer and the water barrier sheath.

The layer is an example of an intermediate layer between the water barrier sheath and the armoring layer.

In one embodiment of the first aspect the power cable comprises an intermediate layer arranged radially between the electrically insulating layer and the water barrier sheath, wherein the intermediate layer comprises a material having a bulk modulus higher than 1 GPa.

It turned out that the mechanical strength and the resistivity against mechanical impact is improved if the intermediate layer exhibits a bulk modulus higher than 1 GPa.

In one embodiment of the first aspect, the electrically insulating layer has a thickness T_{I} of 5 mm to 50 mm, preferably 8 mm to 40 mm, more preferred 12 mm to 35 mm, most preferred 15 mm to 30 mm.

As for the determination of the thickness T_{I} of the insulating layer, it is disclosed herewith that the thickness is measured in the radial direction from the interface of the electrically insulating layer at the side of the center of the power cable to the interface of the electrically insulating layer at the side of the surface of the power cable.

In one embodiment of the first aspect the metal layer of the water barrier sheath is selected from commercially pure Sn, Sn-Cu and Sn-Sb.

In one embodiment of the first aspect the metal layer of the water barrier sheath is selected from Sn-Cu and Sn-Sb.

In one embodiment of the first aspect, the metal layer of the water barrier sheath is selected from:
- the alloy comprising Sb comprises at least one further metal X, wherein X is selected from Ag, Cu, Zn, Bi, P, or Si;
- the Sn alloy that has a Sn content from more than 93% to 99.5% by weight, an Sb content of 0.1% to less than 4% by weight, preferably of more than 0.5% by weight to less than 4% by weight, more preferably of 1% by weight to less than 4% by weight, a Cu content from 0.4% to 2% by weight, and a content of unavoidable impurities of 0 to 1% by weight based on the total weight of the Sn alloy, and wherein the content of Sn, Sb, Cu and unavoidable impurities sum up to 100 % by weight; and
- the Sn alloy that has a Sn content from more than 95% to 99,9% by weight, a Sb content from 0,1% to less 4% by weight, preferably from more than 0.5 % by weight to less than 4% by weight, more preferably from 1 % by weight to less than 4% by weight, and a content of unavoidable impurities of 0 to 1% by weight based on the total weight of the Sn alloy, and wherein the content of Sn, Sb and unavoidable impurities sum up to 100 % by weight.

In cases, where the alloy comprises at least one further metal X, wherein X is selected from Ag, Cu, Zn, Bi, P, or Si, their respective content is from 0.4 to 2 % by weight, preferably 0.6 to 1.8 % by weight, more preferred 1 to 1.5 % by weight.

In the present application, the Sn alloys may have unavoidable impurities in the range of 0 to 1% by weight, preferably 0.001 to 0.8, more preferred 0.01 to 0.7%, most preferred 0.1 to 0.6 by weight.

In the framework of the present application, a given range means that the upper and lower limit is incorporated in the range unless otherwise specified, as e.g. in the case of "less than 4% by weight".

The preferred ranges are associated with the beneficial effect of optimally achieving the invention's underlying problems. The preferred ranges of the Sn alloy ensure that the alternatives to a lead water barrier sheath still fulfil the requirements of mechanical strength, processibility, durability, and resistivity against tin pest.

In one embodiment of the first aspect, the metal layer of the water barrier sheath is free of Pb. The term "free of Pb" means that the Sn alloy comprises less than 1 wt.% of Pb, preferably less than 0.1 wt.%, more preferred less than 0.01 wt.% of Pb. It might be the case, that Pb is part of unavoidable impurities. So, the Sn alloy may comprise 0.001 wt.% or more, preferably 0.05 wt.% or more.

Lead is the metal which is sought for replacement. It was found that alloys with such a small Pb content results in water barrier sheath still providing the above beneficial effects. Further, such metal alloys are technically accessible.

The invention's underlying problems are further solved by the subject-matter of claim 14. A second aspect of the invention therefore relates to a method of manufacturing a power cable comprising the steps of:
- providing a cable core comprising an electrical conductor and an electrically insulating layer arranged radially outside of the electrical conductor, and
- arranging a water barrier sheath comprising a metal layer radially around the cable core, wherein the metal layer is an Sn alloy forming a sheath, wherein the Sn alloy has an Sb content of less than 4 % by weight, preferably from more than 0.5 % by weight to less than 4% by weight, more preferably from 1 % by weight to less than 4% by weight, and
wherein the step of arranging the water barrier sheath includes extruding the metal layer or application of a longitudinally welded sheath.

In one embodiment of the second aspect the step of arranging the water barrier sheath forming a sheath includes extruding the metal layer, application of a longitudinally welded sheath or application of a longitudinally or helically folded laminated structure.

The invention's underlying problems are further solved by the subject-matter of claim 15. A third aspect of the invention therefore relates to a use of an Sn alloy comprising an Sb content of less than 4% by weight, preferably from more than 0.5 % by weight to less than 4% by weight, more preferably from 1 % by weight to less than 4% by weight, which Sn alloy is used for a water barrier sheath of a power cable, preferably for improving the mechanical strength of the water barrier sheath of a power cable.

It has surprisingly be found that the Sn alloy with an Sb content of less than 4 wt.% results in a water barrier sheath being associated with an improved mechanical strength.

Features being solely disclosed in connection with regard to the device of the invention, i.e. with regard to the power cable, are deemed to be disclosed in connection with the method of the invention and vice versa. Further, features being solely disclosed in connection with the device of the invention, i.e. with regard to the power cable, are deemed to be disclosed in connection with the use of the invention and vice versa.

### BRIEF DESCRIPTION OF DRAWINGS

Fig. 1 schematically illustrates one embodiment of the invention, where an example of a power cable cross section is shown comprising one cable core.
Fig. 2 schematically illustrates one embodiment of the invention, where an example of a power cable cross section comprising three cable cores is shown.
Fig. 3 illustrates the tensile strength of an Sn alloy with 2 wt.% of Sb and an Sn alloy with 0.5 wt.% of Sb.

### DETAILED DESCRIPTION

In the following description, various examples and embodiments of the invention are set forth in order to provide the skilled person with a more thorough understanding of the invention. The specific details described in the context of the various embodiments and with reference to the attached drawings are not intended to be construed as limitations.

Where a numerical limit or range is stated herein, the endpoints are included, except the numerical limit is explicitly associated with the term "less than" or "more than". Also, all values and sub ranges within a numerical limit or range are specifically included as if explicitly written out.

As mentioned above, the present invention provides a water barrier sheathing for cables for land or submarine applications wherein the water barrier sheath is made of a tin alloy.

The water barrier sheathing may be either
- a longitudinally welded sheath (LWS) of tin (Sn) or a Sn-alloy,
- an extruded metal sheath made of Sn or a Sn alloy or
- a laminate structure comprising a metal layer made of Sn or a Sn alloy between at least two layers of insulating or non-insulating polymers.

The water barrier sheathing is preferably either
- a longitudinally welded sheath (LWS) of tin (Sn) or a Sn-alloy,
- an extruded metal sheath made of Sn or a Sn alloy.

Alternatively, the water barrier sheathing may be a laminate structure comprising a metal layer made of a Sn alloy between at least two layers of insulating or non-insulating polymers.

Alternatively, the water barrier sheathing may be a laminate structure comprising a metal layer made of a Sn alloy between at least two layers of insulating or non-insulating polymers.

### Definitions:

Percentage solution may refer to: Mass fraction (chemistry) (or "% w/w" or "wt. %. "), for percent mass.

The term "high voltage" as applied herein refers to a voltage above 36kV such as in the range 50 kV to 1.100 kV.

### Water barrier sheath made of a tin alloy

Similar to lead, tin is a soft, malleable and highly ductile metal with a relatively low melting temperature of around 232°C.

It is well known that tin and its alloys can have different crystal structures, wherein the alpha-tin crystal structure has a face-centered diamond-cubic structure and beta-tin has a body-centered tetragonal crystal structure. In cold conditions beta-tin can transform spontaneously into alpha-tin, a phenomenon known as "tin pest" or "tin disease". Commercially pure grades of tin with a tin content of at least 99.5% resist transformation because of the inhibitory effect of small amounts of bismuth, antimony, lead and silver present as unavoidable impurities. Alloying element such as copper (Cu) and antimony (Sb) also increases the hardness of tin (Sn). Thus, the tin and tin alloys for use in a water barrier sheath are selected from commercially pure tin, a Sn-Cu alloy or a Sn-Sb alloy. Table 2 below depicts further details and embodiments of the water barrier sheath materials.

**Table 2: Exemplary alloys (Alloys 1 to 4 belong to the invention)**

| Alloy # | Sn [wt.%] | Sb [wt.%] | Cu [wt.%] | Unavoidable impurities |
|---|---|---|---|---|
| 1 | 97.9 | 2 | 0 | rest |
| 2 | 97 | 2 | 0.4 | rest |
| 3 | 95 | 3.5 | 1.3 | rest |
| 4 | 95 | 3.8 | 1 | rest |
| 5 | 93.3 | 4.5 | 2 | rest |
| 6 | 93.8 | 5 | 1 | rest |
| 7 | 91.5 | 6 | 2 | rest |
| 8 | 92.8 | 7 | 0 | rest |
| 9 | 91.8 | 8 | 0 | rest |
| 10 | 87.5 | 10 | 1 | rest |
| 11 | 85.5 | 12 | 2 | rest |

It is noted that any percentage amount of a metal component in an alloy described herein is provided as a fraction of the weight of the metal per total weight of the alloy as a percentage, or [wt.%].

It will be appreciated by a skilled person that, where a range of a percentage amount of a metal in an alloy is given, the amount of metal in that alloy may vary within that range, provided the total amount of all metals in that alloy adds up to a total of 100 wt%.It will also be appreciated that some metals and alloys may inevitably have very small quantities of impurities within them. These unavoidable impurities may be present since they are typically either too difficult or costly to remove when the metal or alloy is being produced. These impurities may be present in the range from 0.0001%, 0.001%, 0.005% or 0.01% to 0.1%, 0.5%, 1% (wt) based on the total weight of the alloy and wherein each impurity does not exceed 0.5% by weight based on the total weight of the alloy. It will be appreciated such impurities may be present in the metals and alloys of the present invention without affecting or departing from the scope of the invention and comprise the following substances bismuth, lead and silver.

The water barrier sheath material may be a Sn-0.7Cu alloy comprising Sb in an amount between 0.5 and 3.5 wt.%.

### The power cable

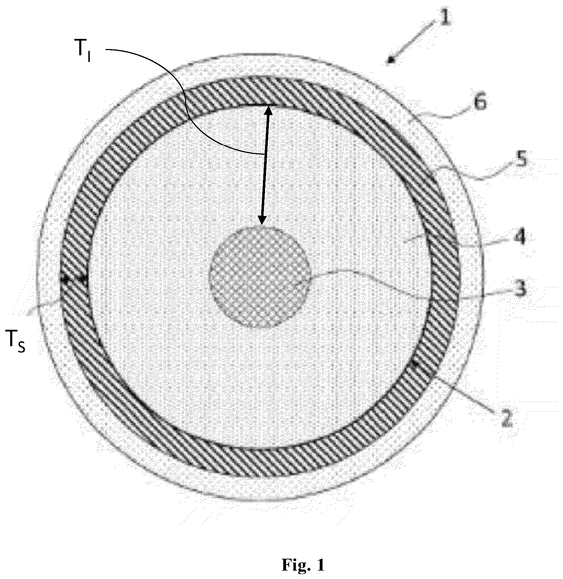

The invention is described further with reference to Fig. 1, Fig. 2, and Fig. 3 of the drawings, which show a schematic of the cross-section of an embodiment of the cable of the invention.

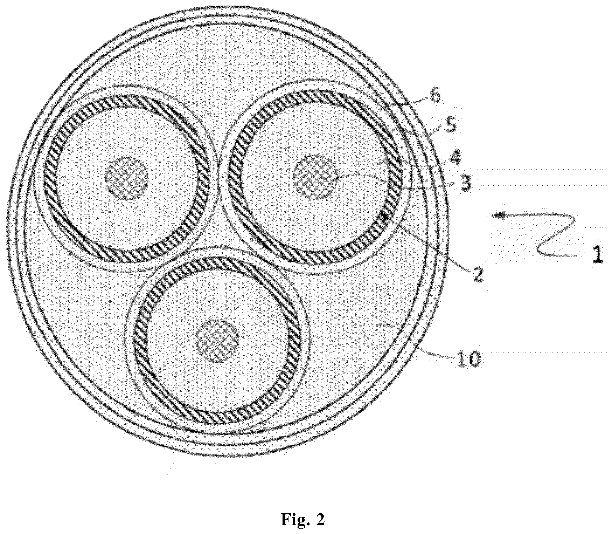

Fig. 1 schematically illustrates an example of a cross section of a power cable 1, where the cable 1 is shown with one cable core 2. This invention is however not limited to a one-core cable, and the cable 1 may comprise two or any higher number of cores 2, as is deemed suitable for the cable's purposes. In Fig. 1, the thickness T_{I} refers to the thickness of the electrically insulating layer 4, and thickness Ts refers to the thickness of the water barrier sheath 5. Both are measured in radial direction from the interface of the adjacent layer in the direction to the center of the power cable to the interface of the adjacent layer in the direction to the surface of the power cable. Accordingly, Fig.2 illustrates an example of a power cable 1 cross section comprising three cable cores 2.

Each core 2 comprises an electrical conductor 3 arranged in the center of the core 2, and an electrically insulating layer 4 arranged radially outside each conductor 3. Outside the first electrically insulating layer 4, though not illustrated in the figures, there may be arranged a layer of sealing material disposed between the electrically insulating layer 4 and a water barrier sheath 5. This sealing material swells upon contact with water thereby working as an extra redundancy measure to prevent ingress of moisture in case of a crack or other failure in the water barrier sheath 5.

It should be noted that the cable 1, and variations thereof, may comprise additional layers, or filling material 10 as exemplified in Fig. 2 , arranged radially outside each conductor 3 or the at least one cable core 2, which will not be described further herein. These layers and materials may be arranged inside, in-between or outside the already mentioned layers herein, and may comprise for example additional insulating, semiconducting, conducting, shielding and armouring layers as is well known in the art.

A polymer layer 6 may be extruded radially outside the water barrier sheath 5. This process is not detailed further herein since this is a well-known process in the art and will be apparent to the person skilled in the art.

The polymeric layer 6 may be fastened to the water barrier sheath 5 by an adhesive layer to prevent movement between the polymeric layer 6 and the water barrier sheath 5.

Alternatively, the water barrier sheath 5 and the polymeric layer 6 are not fastened together to allow movement between the polymeric layer and the water barrier sheath 5.

In other aspects of the invention, one cable core 2 may be put together with several other cable cores, as is illustrated in Fig. 2.

Figure 3 shows the tensile strength of an Sn alloy with a content of 2 wt.% of Sb and the tensile strength of an Sn alloy with a content of 0.5 wt.%. The elongation range before rupture is the interesting range. The lower the stress to obtain a certain elongation the better ductility. The alloy having an Sb content of 0.5 wt.% shows a lower stress in MPa, which means that the material is better in terms of processibility.

Therefore, taking account of a successful avoidance of tin pest and a beneficial processibility, the above ranges, in particular a range below 4% by weight, results in most beneficial effects.

Power cables for intermediate to high current capacities have typically one or more electric conductors at their core followed by electric insulation and shielding of the conductors, an inner sheathing protecting the core, an armouring layer, and an outer polymer sheathing. The conductors of power cables are typically made of either aluminium or copper. The conductor may either be a single strand surrounded by electric insulating and shielding layers, or a number of strands arranged into a bunt being surrounded by electric insulating and shielding layers.

These are the typical minimum of components required to make a functional power cable with comparable high electric power transferring capacity. However, a power cable may also comprise one or more additional components depending on the intended properties and functionalities of the power cable.

The water barrier sheath as applied herein refers to a sheath comprising a layer made of tin or a tin alloy and wherein the sheath is either an extruded metal sheath, a longitudinally welded metal sheath (LWS) or a laminated metal sheath comprising a metal layer laminated between at least two layers of insulating or non-insulating polymer layers.

In a further aspect the water barrier sheath 5 includes a longitudinally welded sheathing. In this aspect, the sheathing material, i.e., the material of the water barrier, may include an exogenous or autogenously welded Sn or Sn alloy. The sheathing may generally be manufactured by forming a precursor metal strip around the cable core welding the edges. The outer diameter of the welded sheath may thereafter be reduced by either drawing or rolling.

In another aspect, the water barrier sheath 5 includes an extruded Sn or Sn alloy sheath. In this aspect, the water barrier sheath may include a continuously extruded Sn or Sn alloy sheath from raw material. The outer diameter of the sheath can be reduced after extrusion by drawing or rolling to remove spacings.

The rolling or drawing reduces the outer diameter of the water barrier sheath 5 in order to minimize the number and size of areas of gaps between the water barrier sheath 5 and the cable core 2.

Typically, the outer diameter of the water barrier sheath may be reduced between 1 mm to 5 mm in a controlled drawing or rolling process. Dependent on the efficacy of the drawing or rolling process, the size of the residual gaps may be reduced between 0.01 mm to 0.5 mm.

In another aspect, the water barrier sheath 5 includes a water barrier laminate, wherein the water barrier laminate 5 comprises a metal foil made of a tin-based material selected from a commercially pure Sn material or a Sn alloy laminated between at least two layers of insulating or non-insulating polymer constituting a final laminate that is insulating or non-insulating.

Isolating and non-isolating polymer layers for use in the laminated structure are well known to a skilled person and examples of non-isolating polymer layers may be found in EP 2 437 272.

The term "metal foil" as used herein, refers to a metal layer of tin or a tin alloy which is placed in the middle of the laminate structure. The invention is not tied to use of any specific thickness Ts of the metal foil. Any thickness Ts known to be suited for use in water barrier sheaths in power cables by the skilled person may be applied. In one example embodiment, the metal foil is a tin or tin alloy disclosed in tables 1 to 4 above. The thickness Ts of the metal foil may be in one of the following ranges: from 10 to 250 µm, from 15 to 200 µm, from 20 to 150 µm, from 25 to 100 µm, and from 30 to 75 µm.

The laminated structure may be wrapped around the cable core 2 with at least some overlap between opposite edges of the laminate structure and wherein the opposite edges of the laminate structure are joined by thermal heating.

In a manufacturing process for a power cable the water barrier sheath may be extruded forming an extruded sheath. Alternatively, the water barrier sheath is applied in form a longitudinally welded sheath.

A typical manufacturing process for forming a power cable wherein the water barrier sheath is a laminated structure is to arrange the laminated structure in form of a tape.

In this respect the tape may be a longitudinally or helically folded laminated structure.

Apart from the laminate structure being easy and cheap to produce, the tape form enables wrapping the laminate around the cable core with a tension to ensure a tight enclosure around the cable core and good contact between deposited laminate layers.

In another aspect the power cable may comprise an intermediate layer (not shown) that is arranged radially between the electrically insulating layer 4 and the water barrier sheath 5.

The intermediate layer is configured so as to absorb residual spacing between the cable core 2 and the water barrier sheath 5 when the power cable is subject to reduction through drawing or rolling. The power cable may be a subsea power cable. In this aspect the subsea power cable is also subject to compression from high water pressure due to the large water depth at which the power cable is located during use.

The intermediate layer arranged radially between the electrically insulating layer and the water barrier sheath, may comprise a material having a bulk modulus higher than 1 GPa.

Advantageously, the intermediate layer includes a material that has a bulk modulus within the range of 1 to 3 GPa in a temperature range of 0 to 90°C. The bulk modulus of a material is a measure of how resistant to compression the material is. It is defined as the ratio of the infinitesimal pressure increase to the resulting relative decrease of the volume. The bulk modulus may be measured as set out in the ASTM D6793 - 02(2012) standard. Further details of the intermediate layer are described in patent application EP3885120, in particular in paragraphs [0026] to [0040].

## Claims

1. A power cable (1) comprising
- a cable core (2) comprising an electrical conductor (3) and an electrically insulating layer (4) surrounding the electrical conductor (3), and
- a water barrier sheath (5) surrounding the cable core (2), wherein the water barrier sheath comprises a metal layer, wherein the metal layer comprises an Sn alloy comprising Sb and wherein the Sn alloy comprises from 1 wt.% to less than 4 wt.% of Sb.

2. The power cable (1) according to claim 1, the water barrier sheath (5) is an extruded metal sheath or a longitudinally welded sheath.

3. The power cable (1) according to claim 1 or claim 2, wherein the electrical conductor is a metal comprising Cu or Al,

4. The power cable (1) according to any one of claims 1 to 3, wherein the power cable (1) is a subsea cable or a land cable.

5. The power cable (1) according to any one of claims 1 to 4, wherein the power cable (1) comprises at least one of following:
three electrical conductors (3);
two electrical conductors (3);
a filler;
a tube;
a glass fibre.

6. The power cable (1) according to any one of claims 1 to 5, wherein the power cable (1) is a high voltage power cable, preferably a high voltage power cable suitable for operating between 50 kV and 1.100 kV, more preferred between 100 kV and 1.000 kV, even more preferred between 250 kV and 750 kV.

7. The power cable (1) according to any one of claims 1 to 6, comprising an armoring layer being arranged radially outside the water barrier sheath (5); wherein the armoring layer preferably comprises a polymeric layer (6).

8. The power cable (1) according to claim 7, wherein the polymeric layer (6) is fastened to the water barrier sheath (5) by an adhesive layer to prevent movement between the polymeric layer (6) and the water barrier sheath (5), or wherein the water barrier sheath (5) and the polymeric layer (6) are not fastened together to allow movement between the polymeric layer (6) and the water barrier sheath (5).

9. The power cable (1) according to any one of claims 1 to 8, comprising an intermediate layer arranged radially between the electrically insulating layer (4) and the water barrier sheath (5), wherein preferably the intermediate layer comprises a material having a bulk modulus higher than 1 GPa.

10. The power cable (1) according to any one of claims 1 to 9, wherein the electrically insulating layer (4) has a thickness T_{I} of 5 mm to 50 mm, preferably 8 mm to 40 mm, more preferred 12 mm to 35 mm, most preferred 15 mm to 30 mm.

11. The power cable (1) according to any one of claims 1 to 10, wherein the metal layer of the water barrier sheath (5) is selected from commercially pure Sn, Sn-Cu and Sn-Sb.

12. The power cable (1) according to any one of claims 1 to 11, wherein the metal layer of the water barrier sheath (5) is selected from:
- the Sn alloy comprising Sb, wherein the Sn alloy further comprises at least one further metal X, wherein X is selected from Ag, Cu, Zn, Bi, P, or Si;
- the Sn alloy that has a Sn content from more than 93% to 99.5% by weight, an Sb content of 1% by weight to less than 4% by weight, a Cu content from 0.4% to 2% by weight, and a content of unavoidable impurities of 0 to 1% by weight based on the total weight of the Sn alloy, and wherein the content of Sn, Sb, Cu and unavoidable impurities sum up to 100 % by weight; and
- the Sn alloy that has a Sn content from more than 95% to 99,9% by weight, a Sb content from 1% by weight to less 4% by weight and a content of unavoidable impurities of 0 to 1% by weight based on the total weight of the Sn alloy, and wherein the content of Sn, Sb and unavoidable impurities sum up to 100 % by weight.

13. The power cable (1) according to claims 1 to 12, wherein the metal layer of the water barrier sheath (5) is free of Pb.

14. A method of manufacturing a power cable (1) comprising the steps of:
- providing a cable core (2) comprising an electrical conductor (3) and an electrically insulating layer (4) arranged radially outside of the electrical conductor (3), and
- arranging a water barrier sheath (5) comprising a metal layer radially around the cable core (2), wherein the metal layer is either Sn or a Sn alloy forming a sheath, wherein the Sn alloy has an Sb content of 1 % by weight to less than 4 % by weight, and
wherein the step of arranging the water barrier sheath (5) includes extruding the metal layer or application of a longitudinally welded sheath.

15. Use of an Sn alloy comprising an Sb content of 1% by weight to less than 4% by weight, which Sn alloy is used for a water barrier sheath (5) of a power cable (1), preferably for improving the ductility of the water barrier sheath (5) of a power cable (1).
